# EUROPÄISCHE PATENTANMELDUNG

(11) **EP 4 016 307 A1**
(43) Veröffentlichungstag der Anmeldung: **22.06.2022**
(21) Anmeldenummer: 21213403.5
(22) Anmeldetag: 09.12.2021
(51) Int. Cl.: G06F 11/36, G06F 16/93

(54) **COMPUTERSYSTEM, VERFAHREN UND COMPUTERPROGRAMM ZUR AUDITIERUNG KOMPLEXER INFORMATIONEN**

(30) Priorität: 16.12.2020 DE 102020133828
(71) Anmelder: TÜV Informationstechnik GmbH, 45307 Essen (DE)
(72) Erfinder: Scheibel, Michael, 58256 Ennepetal (DE)
(74) Vertreter: Horak, Michael

(57) **Zusammenfassung**

Die vorliegende Erfindung betrifft ein Computersystem, Verfahren und Computerprogramm zur Auditierung komplexer Informationen, wobei ein Prüfobjekt analysiert wird und Daten einzelner Verzeichnisse mittels mindestens einer Matrix in jeweils einer Prüfebenen zur weiteren Bearbeitung dargestellt werden.

## Beschreibung

### Kurzdarstellung der Erfindung

Die vorliegende Erfindung bezieht sich im Allgemeinen auf ein Computersystem, Verfahren und Computerprogramm zur Auditierung komplexer Informationen.

Elektronische Informationen unterschiedlicher Art, wie beispielsweise technische Dokumentationen, Texte, (Software-)Quellcodes, Hardwaredesigncodes und/oder Binärcodes werden in Untersuchungsverfahren zumeist im Rahmen eines Qualitätsmanagements zur Einhaltung bestimmter Qualitätsmerkmale, Konformitäten sowie weiterer Eignungen oder Regelwerke vielfach im Rahmen von Prüfungen durch einen Auditor bewertet. Hierbei werden die Audits üblicherweise durch speziell hierfür geschultes Personal durchgeführt, da die zu prüfende elektronische Information aus einer Vielzahl von Teilinformationen besteht, wodurch es für den Auditor schwierig und aufwändig ist
a) die kritischen Informationen des Prüfobjekts zu identifizieren;
b) die Konsequenz der Bewertung einer Teilinformation auf die Bewertung der Gesamtinformation zu beurteilen; und/oder
c) eine Gesamtaussage über die Gesamtinformation zu treffen, ohne jede einzelne Teilinformation bewertet zu haben.

Im Rahmen einer Prüfung muss der Auditor in der Praxis die Gesamtinformation, beispielsweise in Form eines Quellcodes, von Grund auf auf die ihm vorgegebenen Kriterien, z.B. die Erfüllung einer definierten Sicherheitsfunktion oder Qualitätseigenschaft prüfen. Hierbei muss für eine erfolgreiche Prüfung der komplette Informationsbaum in allen Hierarchieebenen überprüft werden, um eine Aussage zu den Kriterien treffen zu können. Dieses sogenannte "Top-Down-Verfahren", d. h. die Bewertung jedes Informationsknotens von der Wurzel zu den Blättern des Informationsbaums, umfasst eine umfangreiche Informationsmenge, die schrittweise bewertet werden muss, da die Informationsmenge an den fiktiven Blättern der meisten Prüfobjekten zu umfangreich ist, als dass eine Prüfung der Gesamtinformation auf dieser Ebene erfolgen kann.

Der Auditor muss folglich auf jeder Hierarchieebene folgende Entscheidungen fällen:
a) Welche Komponente soll priorisiert begutachtet werden, da sie einen höheren Einfluss auf das zu bewertende Prüfziel hat als andere oder gar zu einem negativen Prüfergebnis führt?
b) Welche Komponenten können bereits bewertet werden, ohne dass sie auf unteren Hierarchieebenen auditiert werden müssen (z.B. da sie die zu prüfenden Eigenschaft nicht beeinflussen)?
c) Sind alle Komponenten auf der Prüfebene bereits bewertet oder wurde eine Komponente identifiziert, die auf jeden Fall zu einem negativen Prüfergebnis führt?

Die Aufgabe der vorliegenden Erfindung ist daher, ein Verfahren, Computersystem sowie Computerprogramm zur Auditierung komplexer Informationen zur Verfügung zu stellen, das eine einfache und gezielte Begutachtung einer elektronischen Information ermöglicht und/oder zur einer Funktionalitätssteigerung der Prüfobjekte führt. Darüber hinaus soll die hier dargestellte Erfindung eine schnellere Prüfung von technischen Systemen und Begutachtung von verbunden Informationen ermöglichen, wodurch folglich auch Kosten eingespart werden können.

Die vorliegende Erfindung betrifft daher ein Verfahren zur Auditierung komplexer Informationen eines Prüfobjekts, wobei das Prüfobjekt in einem ersten Schritt einer Analyse unterzogen wird und in einem folgenden Schritt die Analyseergebnisse weiterverarbeitet werden, wobei die Analyse des Prüfobjekts des Prüfobjekts durch ein oder mehrere automatisierte Analyseverfahren ("Engines") erfolgt, deren Ergebnisse aggregiert werden. Die Analyse umfasst insbesondere folgende Schritte umfasst:
a) Überprüfung des Prüfobjekts anhand statischer Tests beinhaltend insbesondere die Überprüfung von/auf:
   i) Array-Überläufe
   ii) Ressourcen- und Speicherlecks
   iii) Benutzung veralteter Funktionen
   iv) Fehlerhafte Verwendung von Zeigervariablen
   v) Verwendung von Funktionen, die nicht threadsicher sind
   vi) Inkorrekte Benutzung der Standard Template Library
   vii) Ungenauigkeiten beim Aufruf von C-Standardbibliotheksfunktionen,
   viii) Inkorrekte Ausnahmebehandlung
   ix) Unterschiedliche Geschwindigkeits- und Stiloptimierungen
   x) Uninitialisierte Variable
   xi) Verwendung "verdächtiger" Ausdrücke
b) Überprüfung des Prüfobjekts anhand von Suchmustern wie z.B. Zeichenketten, regulären Ausdrücken und Ähnlichem insbesondere auf:
   i) Verwendung unsicherer oder problematischer Funktionen
   ii) Vorhandensein von dokumentierten und/oder versteckten Schnittstellen
   iii) Pufferüberläufrisiken
   iv) Potenzielle Wettlaufsituationen
c) Überprüfung des Prüfobjekts anhand von Objekteigenschaften und ggf. der Verknüpfung dieser Objekteigenschaften, wie z.B.:
   i) Codeumfang ("Lines of Code", "LoC")
   ii) Funktionskomplexität (McCabe Komplexität)
   iii) Befunddichte (Anzahl der Befunde pro 1000 Codezeilen)

Die Ergebnisse der Analyse werden in einer Ausführungsform in einem weiteren Schritt aggregiert und in mindestens einer Datenbank zusammengefasst, wobei vorzugsweise Datenstrukturen, Objekte, Klassen und Ebenen des Prüfobjekts mit zugehörigen zusammengefassten Ergebnissen mit der mindestens einen Datenbank verknüpft werden.

Das Verfahren der Analyse umfasst in einem weiteren Aspekt ferner die Bearbeitung oder Änderung der in der Analyse generierten Ergebnisse und/oder die Übertragung der in der Analyse generierten Ergebnisse oder der veränderten Ergebnisse der Analyse zur weiteren Verarbeitung.

Die Weiterverarbeitung der Analyseergebnisse umfasst hierbei folgende Schritte:
a) Untergliederung der Ergebnisse in Informationen, wobei den Informationen eine definierte Funktion festgelegt wird;
b) Verknüpfung der Informationen mit dem Prüfobjekt und/oder mit Verzeichnissen des Prüfobjekts; und
c) Erstellung eines Hierarchiemodells mit unterschiedlichen Hierarchieebenen, wobei jede Ebene eine Matrix aufweist, in der visuelle Darstellungen, vorzugsweise geometrische Formen, einen Informationsgehalt mindestens einer Metrik eines Verzeichnisses des Prüfobjekts wiedergeben.

In einer bevorzugten Ausführungsform erfolgt eine Verknüpfung einer hierarchischen Ebene innerhalb der Matrix mit mindestens einer darunterliegenden und/oder darüberliegenden Matrixebene. Hierbei wird bevorzugt eine durch mindestens eine Metrik definierte Kennzahl der Verzeichnisse, die vorzugsweise als geometrische Form dargestellt sind, mit dem Prüfobjekt verknüpft. Die Hierarchieebenen werden vorzugsweise gebildet, indem auf der jeweils darüber liegenden Ebene die Informationen der zuvor definierten Kennzahlen der Verzeichnisse aggregiert und zusammengefasst werden. In einem Aspekt wird in einem weiteren Schritt der Bearbeitung die Informationen jeder Ebene jeweils derart aufgearbeitet, dass die zusammengefassten Informationen einer jeden Ebene in einer geometrischen Form innerhalb der Matrix der entsprechenden Ebene zusammengefasst werden, wobei vorzugsweise die Fläche der geometrischen Form die Größe der Kennzahl eines Verzeichnisses wiedergibt. In einer bevorzugten Ausführungsform werden Verzeichnisse mit einer hohen Fehlerdichte mittels eines Farbtons eingefärbt. In einem besonders bevorzugten Aspekt der vorliegenden Erfindung wird mehr als eine Metrik für die Weiterverarbeitung verwendet, vorzugsweise wobei werden drei Metriken verwendet, die besonders bevorzugt jeweils durch einen Farbton, die Farbsättigung und eine dreidimensionale Struktur innerhalb der Matrix unterschieden werden.

In einem Aspekt wird ein Schwellenwert für die Fehleranzahl der Verzeichnisse innerhalb der Matrix bestimmt, wobei der Schwellenwert vorzugsweise vor der Analyse oder Zusammenstellung der Ergebnisse bestimmt wird.

In einer weiteren Ausführungsform erfolgt die Auswahl eines Verzeichnisses innerhalb einer Matrix einer Ebene mittels eines Rückgriffs oder Vorgriffs auf die darunterliegende und/oder die darüberliegende Ebene des Verzeichnisses durch die entsprechenden Verknüpfungen der Informationen.

In einem weiteren Schritt kann ferner in einem Aspekt eine Bearbeitung und/oder Bewertung einzelner Informationen und/oder Verzeichnisse auf einer Ebene innerhalb der Matrix erfolgen. In einer bevorzugten Ausführungsform wird das aktualisierte Ergebnis, das durch die Bearbeitung und/oder Bewertung der Informationen generiert wurde, auf der oder den darüberliegenden und/oder darunterliegenden Ebenen in der Matrix wiedergegeben. In einer besonders bevorzugten Ausführungsform wird die Bearbeitung und/oder Bewertung der Informationen innerhalb der Ebenen durch eine künstliche Intelligenz unterstützt oder durchgeführt.

Die vorliegende Erfindung betrifft ferner ein Computerprogramm umfassend Befehle, die bei der Ausführung des Programms auf dem Computer diesen zur Durchführung der zuvor beschriebenen Verfahrensschritte veranlassen.

Die Erfindung betrifft weiterhin eine Benutzerschnittstelle (User Interface) zur Auditierung komplexer Informationen eines Prüfobjekts, die die Informationen zu einem Prüfobjekt hierarchisch darstellt, indem die Benutzerschnittstelle auf einem oder mehreren Systemen ausführbar ist, wobei das mindestens jeweils eine System einen Computer
a) mit mindestens einem Speicher umfasst, der durch einen Computer ausführbare Komponenten speichert;
b) mit mindestens einem Prozessor umfasst, der die in dem Arbeitsspeicher gespeicherten, durch einen Computer ausführbaren Komponenten ausführt, und
c) mit mindestens einer Steuereinheit umfasst, die in der Lage ist eine Darstellung auf mindestens einem Bildschirm oder einer ähnlichen Einheit wiederzugeben,
wobei die Darstellung eine Matrix umfasst, die zusammengefasste Informationen wiedergibt, die aus einer Analyse und/oder Beurteilung eines Prüfobjekts nach einem zuvor beschriebenen Verfahren hervorgegangen sind, wobei die Matrix mehrere visuelle Darstellungen, vorzugsweise geometrische Formen aufweist, die eine Fehlerdichte im Prüfobjekt wiedergeben, wobei die jeweilige geometrische Form durch die mindestens eine Steuereinheit auf Basis der Analysedaten aus dem mindestens einen Speicher generiert wird; und wobei ferner durch mindestens eine Eingabeeinheit eine Auswahl der mindestens einen geometrischen Form ermöglicht wird, wodurch ein Wechseln zwischen den Informationen auf verschiedenen Hierarchieebenen erfolgt.

In einer bevorzugten Ausführungsform weist die Benutzerschnittstelle eine Eingabeeinheit auf, mit welcher Bewertungen und/oder Änderungen innerhalb der Matrix hinterlegt werden können, wobei eine Sichtbarkeit der Änderungen und/oder Bewertungen auf den darüberliegenden bzw. darunterliegenden Ebenen durch die Interaktion der Steuereinheit mit den anderen Komponenten des Systems, insbesondere Speichern und dem mindestens einen Prozessor, erfolgt.

Die Erfindung betrifft darüber hinaus ein Computersystem zur Durchführung eines vorgenannten Verfahrens, zur Ausführung eines zuvor beschriebenen Computerprogramms oder zur Ausführung einer zuvor beschriebenen Benutzerschnittstelle, wobei das Computersystem mindestens zwei Systeme umfasst, die jeweils mindestens einen Speicher und mindestens einen Prozessor aufweisen, die mittels einer Datenübertragungseinheit miteinander verbunden sind, wobei auf einem der Systeme ein zu Prüfobjekt umfasst ist, dass durch mindestens eine Funktionseinheit in Bezug auf bestimmte Kriterien analysiert wird, wobei die mindestens eine Funktionseinheit ferner zur Erstellung mindestens einer Matrix ausgelegt ist, bei der die Matrix eine Anzahl von geometrischen Formen umfasst, die die Fehlerdichte der Verzeichnisse innerhalb einer Ebene eines Prüfobjekts wiedergeben.

In einer bevorzugten Ausführungsform ist die mindestens eine Funktionseinheit des Computersystems zur Analyse eines Prüfobjekts in unterschiedlichen Programmiersprachen ausgebildet.

In einer weiteren Ausführungsform ist die mindestens eine Funktionseinheit auf dem einen der mindestens zwei Systeme umfasst ist und auf die Nutzung durch dieses eine System beschränkt.

Das Computersystem bzw. die mindestens eine Funktionseinheit ist ferner in einem Aspekt der vorliegenden Erfindung ausgebildet, folgende Schritte durchzuführen:
i) Verknüpfung von Informationen mit einzelnen Verzeichnissen eines Prüfobjekts;
ii) Erstellung einer Matrix umfassend eine Anzahl von geometrischen Formen, die die Fehlerdichte der Verzeichnisse innerhalb einer Ebene wiedergeben; und/oder
iii) Interaktion der Steuereinheit mit den anderen Komponenten des Systems, insbesondere Speicher(n) und Prozessor(en), um eine Sichtbarkeit von getätigten Änderungen und/oder Bewertungen innerhalb der einzelnen Verzeichnisse auf die darüberliegenden und/oder darunterliegenden Ebenen zu erstellen.

Die Aufgabe wird weiterhin durch die Ausführungsformen in den Ansprüchen gekennzeichnet und durch die Ausführungen in der Beschreibung und den Zeichnungen näher beschrieben.

### Abbildungen

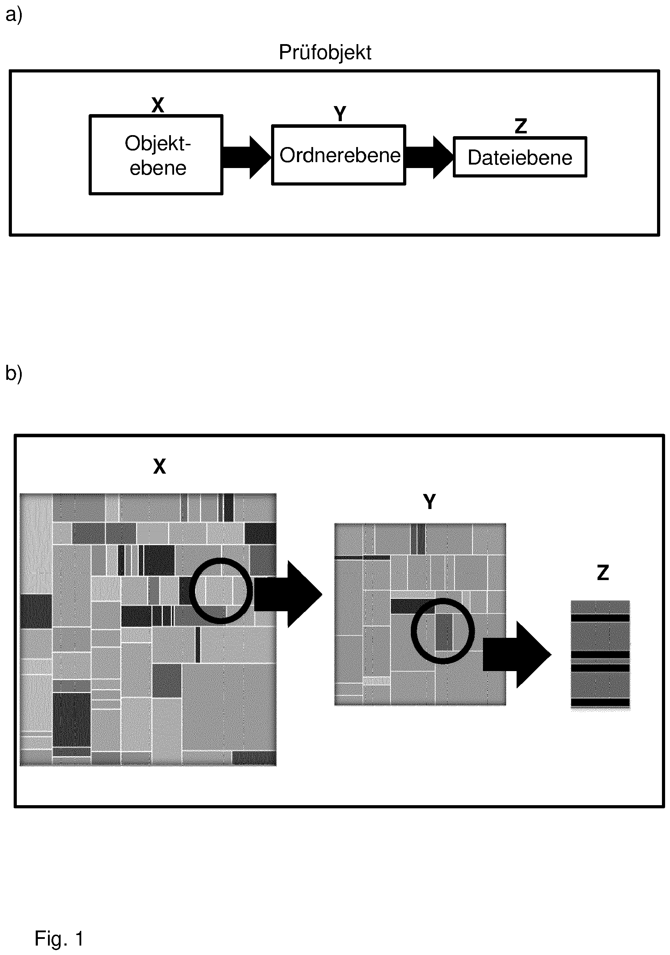

- Fig. 1: Schematische Darstellung der Umsetzung einer Ausführungsform der Codematrix mit mehreren Hierarchieebenen von Informationen, die sich an der Speicherung von Informationen auf Rechensystemen orientiert (Datei, Order, Gesamt(prüf)objekt). Die Pfeile in der Abbildung visualisieren eine mögliche Interaktion zwischen den unterschiedlichen Ebenen eines Prüfobjekts, über einen Ordner mit etwa mittlerer Kritikalität und Größe zu einer Datei mit höherer Kritikalität und unterdurchschnittlicher Größe.

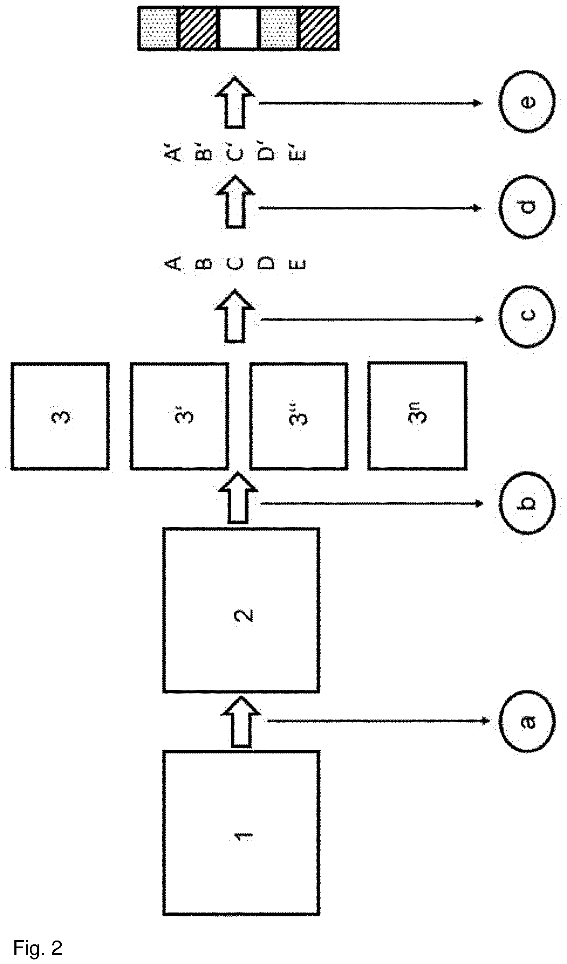

- Fig. 2: Schematische Darstellung eines bevorzugten Verfahrens, wobei zur Übersichtlichkeit nur eine Hierarchieebene mit einer Kennzeichenkategorie dargestellt wird. Prüfgegenstand (1); Digitale Beschreibung des Prüfgegenstandes (2); Komponente (3); Transformation (a); Hierarchisierung (b); Vermessung (c); Auditierung (d); Visualisierung (e).

### Detaillierte Darstellung der Erfindung

Die Erfindung betrifft ein Verfahren, Computersystem sowie Computerprogramm zur Auditierung komplexer Informationen, wobei einzelne Punkte und Informationen aus der Gesamtinformation in einem Informationsobjekt dargestellt werden sowie der Funktionssteigerung von Prüfobjekten.

Im Folgenden sollten die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist. Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Der Begriff "Prüfobjekt" soll als ein technisches Gerät, Softwareprodukt, Hardwareprodukt oder ähnliches Objekt verstanden werden, dass als Gesamtinformation gesehen werden kann, die überprüft werden soll und den fiktiven Aufbau eines Baumes aufweist oder eines hierarchischen Vererbungsverhältnisses. Diese Gesamtinformation beschreibt, spezifiziert und/oder definiert das Prüfobjekt. Die Gesamtinformation selbst umfasst Einzelelemente, Komponenten, Teilinformationen oder weitere Informationssätze, die die Baumstruktur, d.h. die Blätter, Äste und Wurzeln des Prüfobjekts bzw. der Gesamtinformation bilden. Der Begriff "Information" wird in der hiesigen Beschreibung insbesondere für elektronische Informationen unterschiedlicher Art verwendet, die wie beispielsweise technische Dokumentationen, Texte, (Software-)Quellcodes, Hardwaredesigncodes und/oder Binärcodes. In der folgenden Beschreibung sollen vorzugsweise Programme und ihre Strukturen überprüft werden, um eine Aussage u.a. über die Qualität des Programms treffen zu können. In diesem Zusammenhang werden Programme derart beschrieben, dass sie verschiedenen Arten von "Objekten" umfassen. Objekte umfassen hierbei eine Datenstruktur sowie Funktionen oder (jeweils) einen Satz von Operationen, um auf die Datenstruktur zuzugreifen und diese bearbeiten zu können, letztere werden auch als "Verfahren" bezeichnet. Objekte mit gemeinsamen Funktionsweisen und ähnlichen oder identischen Datenstrukturen können hierbei in einer "Klasse" zusammengefasst werden und bilden eine Ebene aus. Von diesen Klassen aus können Datenstrukturen und Funktionen in eine weitere neue Ebene bzw. Klasse weitervererbt werden, wobei die abgeleiteten Objekte der neuen Ebene die Attribute und Funktionsweisen der vorherigen Klasse und Ebene aufweisen. Die neuen Klassen oder Ebenen können jedoch auch weitere Eigenschaften aufweisen.

Die Begriffe "Speicher", "Datenspeicher" und im Wesentlichen jede andere Speicherkomponente für Daten unterschiedlicher Art, die für die Funktionalität einer Komponente relevant ist, sollen sich in dieser Offenbarung auf "Arbeitsspeicherkomponenten", in einem "Arbeitsspeicher" enthaltene Entitäten oder Komponenten beziehen, die einen Arbeitsspeicher aufweisen. Diese Arbeitsspeicher und/oder Arbeitsspeicherkomponenten können hierbei als flüchtiger Arbeitsspeicher und/oder nicht flüchtiger Arbeitsspeicher konzipiert sein. Darüber hinaus können Speicher maschinenlesbare Medien umfassen, die zum Speichern, Codieren oder Tragen von Anweisungen in der Lage sind. Solche Medien können insbesondere Festkörperspeicher sowie optische und magnetische Medien und/oder Speicherdienste (Cloud-Speicher) umfassen, ohne darauf beschränkt zu sein. Beispiele für maschinenlesbare Medien umfassen u.a. Halbleiterspeichergeräte (wie beispielsweise Solid-State-Drive (SSD)), elektrisch löschbare programmierbare Festwertspeicher, Magnetplatten, magnetooptische Platten, Flash-Speicher (wie beispielsweise Universal Serial Bus (USB)), CD-ROM- und/oder DVD-ROM-Datenträger umfassen.

Der Begriff "Prozessor" bezieht sich auf eine Einheit, die die in einem Arbeitsspeicher gespeicherten, durch einen Computer oder ähnliches Gerät ausführbare Komponenten ausführt. Hierbei umfasst der Begriff "Prozessor" auch eine beliebige Anzahl von Prozessoren, die unterschiedlicher Art sein können. Beispiele für entsprechende Prozessoren der hiesigen Beschreibung umfassen, sind jedoch nicht beschränkt auf die folgende Auflistung, jede Datenverarbeitungseinheit, eine Kombination von Datenverarbeitungseinheiten oder Einheit, die Einzelkernprozessoren; Mikroprozessoren; Einzelkernprozessoren mit Fähigkeit für eine Software-Multithreading-Ausführung; Mehrkernprozessoren mit Hardware-Multithreading-Technologie; eingebettete Prozessoren; Parallelplattformen; und Parallelplattformen mit verteiltem gemeinsam genutztem Arbeitsspeicher; Energiesparprozessoren oder andere bekannte Verarbeitungselemente. Der Prozessor kann auch ein Teil eines Systemchips sein, auf welchem der Prozessor und andere Komponenten zu einer integrierten Einzelschaltung zusammengefügt wurden. Ferner kann der Prozessor auch auf eine integrierte Schaltung, eine anwendungsspezifische integrierte Schaltung (Application Specific Integrated Circuit, ASIC), einen digitalen Signalprozessor (Digital Signal Processor, DSP), eine komplexe programmierbare Logikeinheit (Complex Programmable Logic Device, CPLD), eine diskrete Gatter- oder Transistor-Logik, ein feldprogrammierbares Gatter-Array (Field Programmable Gate Array, FPGA), einen programmierbaren Logik-Controller (Programmable Logic Controller, PLC), diskrete Hardware-Komponenten oder jede Kombination hiervon beziehen, die zum Durchführen der entsprechenden Funktionen der Erfindung ausgelegt sind.

Begriffe, wie beispielsweise "verarbeiten", "berechnen", "feststellen" und/oder ähnliche Begrifflichkeiten, beziehen sich auf die Aktionen und Prozesse eines Computersystems oder einer ähnlichen elektronischen Rechenvorrichtung. Hierbei werden Daten, welche als physikalische (elektronische) Quantitäten innerhalb der Register und Speicher des Computersystems dargestellt sind, in andere Daten, die in ähnlicher Weise als physikalische Quantitäten innerhalb der Speicher und Register des Computersystems, anderer Informationsspeicher oder ähnlichen Vorrichtungen dargestellt sind, umgewandelt oder prozessiert.

Der Begriff "Computerprogramm" umfasst Befehle, die bei der Ausführung des Programms auf dem Computer diesen zur Durchführung bestimmter Verfahrensschritte veranlassen. Insbesondere enthält ein Computerprogramm Anweisungen, die dafür verwendet werden können, einen Computer (oder sonstige elektronische Vorrichtungen) darauf zu programmieren, ein Verfahren gemäß der vorliegenden Erfindung auszuführen. In anderen Ausführungsformen könnten einzelne oder alle Schritte der vorliegenden Erfindung durch spezifische Hardware-Komponenten ausgeführt werden, die eine festverdrahtete Logik zum Ausführen der Schritte enthalten oder durch eine beliebige Kombination aus programmierten Computerkomponenten und speziellen Hardware-Komponenten. Das Computerprogramm kann auch durch einen Datenträger umfasst sein, bei dem es sich um einen maschinell lesbaren Datenspeicher handelt. Bei einem entsprechenden Speicher kann es sich um eine der zuvor beschriebenen Speicherarten handeln.

Im weiteren Verlauf der Beschreibung wird die Erfindung zur Vereinfachung in Bezug auf Programme oder Software als Prüfobjekte beschrieben. Jedoch kann die Erfindung, d.h. das Verfahren, System und Computerprogramm, anders als bekannte Methoden aus dem Stand der Technik, auch im Hinblick auf andere Prüfobjekte angewandt werden, wie technische Geräte, Hardwareprodukte oder ähnliche Objekte. Darüber hinaus sind mithilfe der vorliegenden Erfindung beliebig viele Hierarchestufen überprüfbar und modifizierbar.

Die vorliegende Erfindung soll neben der vereinfachten Begutachtung elektronischer Information eine verbesserte Verfolgung, insbesondere innerhalb der Programm- und Softwareentwicklung, bereitstellen. Darüber hinaus soll eine Prüfung dieser auch ohne die traditionellen Auditoren ermöglicht werden, indem ein Verfahren, Computersystem und Computerprogramm zur Verfügung gestellt wird, das die Informationen des Prüfobjekts, wie beispielsweise einer neu entwickelten Software oder eines Programms, analysiert und in einer Matrix darstellt. Ein weiterer Vorteil der vorliegenden Erfindung ist, dass die Funktionalität des Prüfobjekt gesteigert wird, indem fehlerhafte Stellen identifiziert und modifiziert werden. Ein oder mehrere Fehler in einem Prüfobjekt, wie beispielsweise einem technischen Gerät, die üblicherweise einem komplexen Aufbau unterliegen, können mithilfe der vorliegenden Erfindung identifiziert und strukturiert dargestellt werden, wodurch Fehler in den einzelnen hierarchischen Stufen des Prüfobjekts, d.h. den einzelnen hierarchischen Ebenen, und ihre entsprechenden Auswirkungen auf die folgenden Hierarchiestufen abgebildet und gelöst werden können - im Falle, dass diese Fehler auch eine Auswirkung auf das Prüfobjekt haben. Die Bearbeitung bzw. Änderung eines oder mehrerer potentieller Fehler im Prüfobjekt auf einer oder mehreren hierarchischen Ebenen hat eine Wirkung auf die folgende Informationsausgabe. Die Konsequenzen der Auffindung und/oder Bearbeitung bzw. Modifizierung möglicher Schwachstellen in einer unteren Hierarchieebene auf die nachfolgenden Hierarchieebenen bzw. das Prüfobjekt sind wesentlich für die Beurteilung, Prüfung und die Funktionalität des Prüfobjekts. Folglich wird eine verbesserte und schnellere Bearbeitung möglicher Schwachstellen zur Verfügung gestellt.

Systeme, auf denen ein solches erfindungsgemäßes Verfahren durchgeführt werden bzw. das Computersystem und/oder Computerprogramm umfasst sein kann, können jede beliebige Art von Komponente, Maschine, Einheit, Einrichtung, Vorrichtung und/ oder Instrument sein, die bzw. das einen Prozessor aufweist. Entsprechende Systeme sind beispielsweise, jedoch nicht begrenzt auf die folgende Auflistung: Laptops, Notebooks, Desktop-Computer, Tablet-Datenverarbeitungseinheiten, Datenverarbeitungsmaschinen und/oder Datenbanken der Server-Klasse, Mobiltelefone, Smartphones, Verbrauchergeräte; Verbraucherinstrumente, industrielle und/oder kommerzielle Einheiten, Handheld-Einheiten, digitale Assistenten, Multimedia-Internet-fähige Telefone, Multimedia-Player und/oder ähnliche Vorrichtungen. Bevorzugt werden jedoch Datenverarbeitungsmaschinen der Server-Klasse sowie Desktop-Computer verwendet.

In einem besonders bevorzugten Aspekt der Erfindung ist das System zur Datenübertragung mittels eines drahtgebundenen und/oder drahtlosen Netzwerks in der Lage. Durch eine solche Datenübertragungseinheit kann die Prüfung des entsprechenden Prüfobjekts auch mittels eines Fernzugriffs ("remote") erfolgen. In einem solchen Fall, ist ein Vor-Ort-Besuch des Auditors oder des Prüfers nicht notwendig, wodurch Kosten und Ressourcen eingespart werden. Darüber hinaus, ist eine Herausgabe der Informationen zu den Prüfobjekten, wie beispielsweise des Quellcodes, durch den Hersteller des Prüfobjekts nicht notwendig.

Drahtlose Verbindungen können beispielsweise Bluetooth-Verbindungen, drahtlose lokale Netzwerke, wie beispielsweise (WLAN - Wireless Local Area Network), zellulare Netzwerke, niedrigenergie-Weitverkehrsnetzwerke (LPWAN- Low-Power Wide Area Network) und/oder Kommunikationsverbindungen wie Funkverbindungen umfassen. Letztere können gemäß einer oder mehreren der folgenden Funkkommunikationstechnologien und/oder einem oder mehreren der folgenden Funkkommunikationsstandards funktionieren, ohne darauf beschränkt zu sein: Funkkommunikationstechnologie des Globalen Systems für mobile Kommunikation ((GSM) Global System for Mobile Communications), Funkkommunikationstechnologie des allgemeinen paketvermittelten Funkdiensts ((GPRS) General Packet Radio Service), Enhanced Data Rates for GSM Evolution-Funkkommunikationstechnologie (EDGE), Universal Mobile Telecommunications System (UMTS), Long Term Evolution (LTE); Mobitex, Third Generation (3G), Long Term Evolution Advanced (4th Generation) (LTE Advanced (4G)), 5G (fünfte Generation [des Mobilfunks]) und/oder Richtfunkverbindungen.

Im Allgemeinen wird in der vorliegenden Erfindung zwischen zwei Systemen unterschieden, (a) dem System, auf der ein bestimmter Quellcode einer Software oder eines Programms vorliegt und überprüft werden soll und (b) ein System, auf dem die Informationen verarbeitet werden. Um das Prüfobjekt analysieren zu können, besteht jedoch grundsätzlich auch die Möglichkeit, dass die Verarbeitung der Informationen vor Ort, also mit nur einem System (a), stattfindet. Wie zuvor beschrieben, ist u.a. zur Kosteneinsparung aufgrund von Anreisekosten externer Auditoren, eine Fernüberprüfung bevorzugt. Hierbei wird auf dem System (a) auf dem ein neues Programm bzw. eine neue Software entwickelt wurde und vorhanden ist, der Quellcode dieses bzw. dieser analysiert. Eine solche Analyse des Quellcodes umfasst hierbei das Einlesen der Quellcodedateien und die Analyse durch eine oder mehrere unabhängige automatisierte Analyseverfahren ("Engines"), die jeweils verschiedene Regeln und Methoden zur Analyse anwenden. In einer bevorzugten Ausführungsform umfasst die Analyse des Quellcodes hierbei folgende Schritte, die die Überprüfung des Prüfobjekts anhand statischer Tests beinhaltend die Überprüfung auf:
i) Array-Überläufe;
ii) Ressourcen- und Speicherlecks;
iii) Benutzung veralteter Funktionen;
iv) Fehlerhafte Verwendung von Zeigervariablen;
v) Verwendung von Funktionen, die nicht threadsicher sind;
vi) Inkorrekte Benutzung der Standard Template Library;
vii) Ungenauigkeiten beim Aufruf von C-Standardbibliotheksfunktionen;
viii) Inkorrekte Ausnahmebehandlung;
ix) Unterschiedliche Geschwindigkeits- und Stiloptimierungen;
x) Uninitialisierte Variable;
xi) Verwendung "verdächtiger" Ausdrücke;
xii) Verwendung unsicherer oder problematischer Funktionen;
xiii) Vorhandensein von dokumentierten und/oder versteckten Schnittstellen;
xiv) Pufferüberläufrisiken;
xv) Potenzielle Wettlaufsituationen;
xvi) Codeumfang ("Lines of Code", "LoC");
xvii) Funktionskomplexität (McCabe Komplexität); und/oder
xviii) Befunddichte (Anzahl der Befunde pro 1000 Codezeilen).

Die statischen Tests sind jedoch nicht begrenzt auf die vorherige Auflistung, sondern können auch weitere Schritte, Tests und/oder Kombinationen der oben genannten Schritte umfassen. In einer Ausführungsform können die einzelnen Schritte und/oder automatisierte Analyseverfahren ("Engines") jeweils einzeln aktiviert, deaktiviert und konfiguriert werden, als auch neue Engines hinzugefügt werden, sodass für jedes Prüfobjekt individuell eine spezielle Anordnung und Funktionsweise der Analyseschritte ausgewählt und verwendet werden kann. Die einzelnen Analyseschritte und/oder Engines können als Zusatzmodule oder Erweiterungen, sogenannte Plug-ins, ausgebildet sein. Die Plug-ins können hierbei auch nachträglich hinzugefügt oder installiert werden, wobei die Integration dieser vorzugsweise über eine Plug-in-Schnittstelle erfolgt. Alternativ oder zusätzlich kann die gesamte Analyse als Plug-in Architektur ausgebildet sein, wobei jeder einzelne Schritt aus- und angeschaltet werden kann, wodurch das gesamte Analyseverfahren aus den Plug-ins besteht.

Die zuvor genannten Schritte werden hierbei vorzugsweise durch mindestens eine Funktionseinheit ausgeführt, die als Computerprogramm ausgebildet sein kann. Das Computerprogramm umfasst hierbei Befehle, die bei der Ausführung des Programms auf dem Computer diesen zur Durchführung einer Analyse durch eine oder mehrere unabhängige Scan Engines, die jeweils verschiedene Regeln und Methoden verwenden. In einer besonders bevorzugten Ausführungsform werden die zuvor genannten Verfahrensschritte veranlasst. Bei den Analyse-Engines kann es sich in einem Aspekt um eine Kombination bekannter Analysetools. Eine Kombination der Analyseschritte der jeweiligen Tools ermöglicht hierbei eine genauere und verbesserte Analyse des Prüfobjekts. Daher werden die Funktionen vorzugsweise mindestens zwei bekannter Analysetools kombiniert und verwendet. Hierbei kann es sich beispielsweise um Cppcheck, RATS, Flawfinder, und /oder Tscancode handeln, ist jedoch nicht begrenzt auf diese Auflistung. In einer besonders bevorzugten Ausführungsform wird neben den zuvor genannten Analyse-Engines ferner eine Metrikverfahren, d. h. Metrik-Engine, angewendet, welches vorzugsweise zusätzlich zu einem oder einer Kombination von anderen Analyseengines immer aktiv ist. Bei einigen Prüfobjekten kann ferner der Einsatz einer sogenannten "Backdoor Detection" von Nutzen sein, die zum Aufspüren von versteckten Schnittstellen in Software eingesetzt wird. In einer bevorzugten Ausführungsform werden die Schritte der Backdoor Detection als heuristische Analysemethode und/oder der Engine, die die Schritte zum Aufspüren der versteckten Software ausführt, angewandt. Ferner kann der Schritt der Aufspürung von versteckten Schnittstellen in einem Aspekt nicht nur auf Quellcodes eine Prüfobjekts angewendet werden, sondern auch auf Kompilate.

Die mindestens eine Funktionseinheit zur Analyse des Prüfobjekts, insbesondere des Quellcodes, kann hierbei für die Verwendung in unterschiedlichen Programmiersprachen ausgebildet sein. Mögliche Programmiersprachen umfassen hierbei typisierte Sprachen, wie beispielsweise C++ oder Java, und typenlose Sprachen, wie beispielsweise JavaScript oder Prolog. Ferner sind auch prozedurale oder deklarative oder objektorientierte Programmiersprachen möglich. Der Fachmann auf dem Gebiet kann jedoch jede bekannte Sprache auswählen. Die mindestens eine Funktionseinheit, die als Computerprogramm ausgebildet sein kann, kann offline auf dem System (a), auf dem ein neues Prüfobjekt bereitgestellt wurde, verwendet werden. Der Begriff "offline" beschreibt hierbei, dass der Zugriff auf das System beschränkt ist und nicht durch eine Fernkommunikation verläuft. In einem solchen Fall wird das Computerprogramm direkt auf dem System vor Ort gestartet, auf dem sich das zu prüfende Objekt befindet. Alternativ kann das Computerprogramm durch einen Fernzugriff mittels einer Datenübertragung auf dem "Vor-Ort"-System (a) gestartet werden oder das Computerprogramm oder Teile hiervon, wie beispielsweise einzelne Funktionseinheiten, können auf einem Auditor-System (b) ausgeführt werden. Das letztere System (b) weist hierbei selbst das zu prüfende Objekt nicht auf, sondern ist über eine Kommunikationsleitung mittels Datenübertragung mit dem "Vor-Ort"-System (a) verbunden.

Mithilfe der oben genannten Schritte wird das Prüfobjekt automatisiert untersucht, indem vorzugsweise der dem Prüfobjekt zugrundeliegenden Quellcode auf potenzielle Schwachstellen überprüft wird. Die Ergebnisse der Analyse, bei der insbesondere die oben genannten Verfahrensschritte durchgeführt werden, werden aggregiert und vorzugsweise in mindestens einer Datenbank zusammengefasst. Die in einem solchen Verfahrensschritt generierten Ergebnisse dienen der Berechnung der Fehlerdichte und werden vorzugsweise jeweils als einzelne Fehler innerhalb eines bestimmten Bereichs, vorzugsweise innerhalb einer Ebene dargestellt. Ob eine potenzielle Schwachstelle eine tatsächliche Schwachstelle darstellt, könnte üblicherweise nach dem bekannten Stand der Technik nur durch eine manuelle Analyse ermittelt werden. Diese Zusammenstellung der Ergebnisse der Objektprüfung kann in einer Ausführungsform durch den Entwickler des Prüfobjekts, Hersteller, Arbeitgeber und/oder Besitzer des Vor-Ort-Systems (a) verändert werden, bevor eine weitere Bearbeitung erfolgt. Durch die Vor-Ort-Analyse des Prüfobjekts und Zusammenfassung mithilfe geeigneter Strukturen, wie beispielsweise mindestens einer Datenbank, ist es in einer Ausführungsform möglich, dass das zu prüfende Objekt, das System (a) nicht verlässt. Das Computerprogramm, welches die mindestens eine Funktionseinheit zur Ausführung der o.g. Schritte umfasst, kann hierbei im Rahmen einer "Remote Code Analyse" dem Entwickler des Prüfobjekts, Hersteller, Arbeitgeber und/oder Besitzer des Vor-Ort-Systems (a) überlassen werden.

Obgleich die oben genannten Verfahrensschritte als nacheinander ablaufende Vorgänge dargestellt sind, können die Schritte parallel und in verschiedenen Kombinationen von parallelen und seriellen Modi ausgeführt werden.

Die zusammengefassten Ergebnisse werden in einer Ausführungsform mithilfe einer technischen Dokumentendatenbank (technical documents database), die eine Vielzahl von Datenbanken umfassen kann, organisiert. In einer besonders bevorzugten Ausführungsform werden ferner entsprechende Datenstrukturen, Objekte, Klassen und Ebenen der zu prüfenden Objekte mit zugehörigen zusammengefassten Ergebnissen mit der mindestens einen Datenbank verknüpft. Somit werden aggregierte Dateninformationen erzeugt, die auf potentielle Schwachstellen innerhalb des Prüfobjekts hinweisen und mit diesem verknüpft werden können.

Eine Gesamtaussage zur Funktionalität des Prüfobjekts mithilfe der zusammengefassten Ergebnisse ist jedoch weiterhin schwierig, da zumeist eine Vielzahl von Informationen vorliegen, die jeweils einer Einzelfallbewertung durch einen Auditor unterzogen und bewertet werden müssten. Eine Aussage über die Auswirkung einer potentiellen Schwachstelle, z.B. innerhalb eines Quellcodes, auf das gesamte Prüfobjekt kann durch die zusammengefassten Ergebnisse nicht ohne Weiteres getroffen werden.

Aus diesem Grund werden die zusammengefassten Ergebnisse in einer weiteren Ausführungsform der vorliegenden Erfindung im weiteren Verlauf zur Informationsanalyse, insbesondere zum Auffinden und Übertragen der relevanten Informationen folgend bearbeitet. Eine solche Bearbeitung kann grundsätzlich Vor-Ort erfolgen, wo das Prüfobjekt vom Entwickler des Prüfobjekts, Hersteller, Arbeitgeber und/oder Besitzer erstellt wurde, d.h. auf dem vorherig beschriebenen System (a). Wie zuvor erläutert, ist das Computersystem jedoch vorzugsweise derart ausgebildet, dass es zwei Systeme umfasst, wobei auf dem zweiten System (b) die Informationen des analysierten Systems (a) weiterverarbeitet werden. Die beiden Systeme (a) und (b) sind hierbei mithilfe einer oder mehrerer Kommunikationsleitungen miteinander verbunden, die der Datenübertragung dienen. Entsprechende Datenübertagungsleitungen mittels drahtgebundener und/oder drahtloser Netzwerke können die zuvor erwähnten Datenübertagungsmittel sein. Alternativ kann die Zusammenfassung der Analyse mittels mobiler Datenspeicher, in Form von Datenträgern, beispielsweise mittels externer Geräte, wie Festplatten oder Flash-Speicher, von einem System zum anderen System übertragen werden, ohne eine Kommunikationsleitung zu verwenden.

Die Bearbeitung der in der ersten Analyse zusammengefassten Ergebnisse umfasst hierbei vorzugsweise die folgenden Schritte:

In einem ersten Schritt werden die zusammengefassten Ergebnisse in Informationen untergliedert, wobei diesen eine definierte Funktion festgelegt wird. Bei den Informationen wird im Folgenden von Metriken gesprochen. Die Metriken sind hierbei flexibel definierbar und können beispielsweise den Informationsumfang, wie zum Beispiel die Datenmenge, Codezeilen und/oder Wörter; durch Analysewerkzeuge berechnete Kennzahlen, wie beispielsweise Syntaxfehler, wie die Anzahl fehlerhafter Funktionsaufrufe und/oder Rechtschreibfehler; durch vergangene Audits erfasste Kennzahlen oder Statistiken zu vergleichbaren Prüfobjekten; und/oder in öffentlichen Informationsquellen zugängliche Kennzahlen oder Statistiken zum Prüfobjekt, umfassen. Die Metriken sind jedoch nicht beschränkt auf die vorangehende Auflistung, sondern können auch weitere dem Fachmann geläufige Metriken umfassen, die beispielsweise durch die Kombination vorhandener Metriken neu entwickelt werden.

Die Funktionsweise eines Prüfobjekts, wie beispielsweise einer Software hängt von dem ihr zugrundeliegenden Quellcode ab. Da letzterer üblicherweise auf eine oder mehrere einzelne Dateien verteilt ist, kann eine zuvor beschriebene Metrik je nach Ausführung auf Teile oder den kompletten Quellcode angewandt werden. Mithilfe einer Metrik lassen sich funktionelle Zusammenhänge und Eigenschaften erkennen.

In einem weiteren Schritt wird in einer Ausführungsform eine oder mehrere Metriken mit den zusammengefassten Ergebnissen und vorzugsweise auch mit den zu prüfenden Informationen verknüpft. Eine solche Verknüpfung erfolgt vorzugsweise auf unterschiedlichen Hierarchieebenen. Solche hierarchischen Ebenen sind beispielsweise in Fig. 1 dargestellt, und umfassen im hiesigen Ausführungsbeispiel die Objektebene, die Ordnerebene und die Dateiebene. Grundsätzlich kann die Anzahl der hierarchischen Ebenen jedoch auch erhöht oder verkleinert werden, sodass die einzelnen Ebenen weniger oder mehr Informationen umfassen. Eine entsprechende Verknüpfung der Metriken mit den Informationen erfolgt hierbei vorzugsweise indem auf der untersten Informationsebene, die durch die Metriken definierten Kennzahlen mit dem Informationsobjekt verknüpft werden. Auf der jeweils darüber liegenden Ebene, wie beispielsweise der Dateiebene (3) wie in Fig. 1 abgebildet, werden die zuvor definierten Kennzahlen aggregiert, wobei zur besseren Darstellbarkeit von Fehlern innerhalb des Prüfobjekts eine farbliche Darstellungsform von Fehlern innerhalb einer Gesamtmatrix, die die entsprechende Hierarchieebene darstellt, gewählt wird. Der Begriff "Kennzahl" ist hierbei ein bestimmter Leistungsindikator, der durch den Benutzer festgesetzt wurde. Hierbei kann es sich grundsätzlich um jegliche Art von Parameter handeln, der untersucht werden soll. Insbesondere können Kennzahlen folgende Indikatoren oder Parameter sein, die gemessen wurden, ohne auf die folgende Auflistung begrenzt zu sein: Kennzahl zur Überprüfung, ob Verstöße gegen gängige Programmierregeln im Quellcode vorliegen, wie beispielsweise Fehler (sogenannte Bugs), Schwachstellen (Vulnerabilites) und/oder festgestellten Verstöße (Code Smells); Kennzahl bezüglich der Testabdeckung des Quellcodes in Prozent; Anzahl der durchgelaufenen, übersprungenen und fehlgeschlagenen Testfälle; Anzahl der duplizierten Quellcodezeilen; Anzahl der kommentierten und dokumentierten Zeilen an der Gesamtzeilenanzahl; und/oder Auswertung der Komplexität von Klassen und Methoden anhand gängiger Größen.

In einem weiteren Schritt werden die Metriken und Kennzahlen in einer Ausführungsform der vorliegenden Erfindung aufbereitet. In Abhängigkeit von der Anzahl der verwendeten Metriken, werden die Informationen der einzelnen Metriken graphisch dargestellt. Wird lediglich eine Metrik vom Benutzer bestimmt, so wird die Information zu der Metrik in einer bestimmten optischen Form, vorzugsweise geometrischen Form, dargestellt. Bei der sogenannten optischen Darstellung, der Matrix, handelt es sich um eine optische Anzeige, die aus einzelnen Bildpunkten in einer Matrix aus horizontalen Zeilen und vertikalen Spalten besteht, wie beispielsweise der Fig. 1 zu entnehmen ist. Mithilfe der generierten Matrix lassen sich Fehler in bestimmten Bereichen einfach erkennen und ermöglichen es die Wirkung des Fehlers auf die darauffolgende oder die darunterliegende Hierarchieebene wahrzunehmen. Ein Fehler im Quellcode muss sich nämlich nicht unbedingt auf einer höheren Hierarchieebene widerspiegeln. Dies ist z.B. dann der Fall, wenn der Fehler im Rahmen der Auditierung als "nicht relevant" bewertet wird, weil er die zu prüfenden Funktionen nicht beeinflusst. Der Fehler kann als Folge "stumm" sein und keine Auswirkungen auf die zu prüfenden Funktionen des gesamten Prüfobjekts haben. Folglich können mithilfe der vorliegenden Erfindung nur für das Prüfobjekt relevante Fehler behoben bzw. geändert werden. Ferner wird durch die Änderung eines oder mehrerer Fehler innerhalb einer Hierarchieebene mithilfe der vorliegenden Erfindung auch die daraus resultierende Änderung auf die darüberliegenden Ebenen nachberechnet und dargestellt, wodurch zeitaufwendige Suchen von Fehlern und Änderungen mit Gesamtwirkung auf das Prüfobjekt vermieden werden.

Im folgenden bevorzugten Ausführungsbeispiel wird die aus der Metrik gewonnenen Information visuell dargestellt, vorzugsweise in Form eines Rechtsecks, jedoch kann es sich grundsätzlich auch um jede andere geometrische Form handeln. Wird im hiesigen Beispiel eine Metrik angewandt, wird die Information als Rechteck dargestellt, wobei die Fläche des Rechtecks die Größe der Kennzahl wiedergibt. Demnach ist die Fläche des Rechtecks größer je größer die Kennzahl ist. Umgekehrt ist die Fläche des Rechtecks kleiner, je kleiner die Kennzahl ist. In einer Ausführungsform gibt die Größe des Rechtecks an, wie umfangreich der Quellcode beispielsweise eines Objekts, eines Ordners und/oder einer Datei eines Prüfobjekts, wie beispielsweise einer Software oder eines technischen Geräts, ist. Die Matrix ist, wie zuvor beschrieben, umfasst einzelne Bildpunkte die in horizontalen Zeilen und vertikalen Spalten angeordnet sind, wie beispielsweise der Fig. 1 aufgezeigt, und den Umfang des Prüfobjekts und/oder die Fehlerdichte darstellen. Der Einfachheit halber wird im Folgenden bei Bereichen innerhalb von Objekten, Ordnern und Dateien von Verzeichnissen gesprochen. Fehler innerhalb eines Codes werden hierbei vorzugsweise durch veränderte Farbgebung signalisiert. Dementsprechend weisen Verzeichnisse mit einer hohen Fehlerdicht im Quellcode eine starke Einfärbung des jeweiligen Rechteckes auf. Verzeichnisse der Software mit niedriger Fehlerquote im Quellcode weisen hingegen nur eine geringe Einfärbung auf. Bei der Verwendung einer Metrik, hat sich eine Ampelfarbgebung bewährt, bei der Verzeichnisse mit hoher Fehlerdichte rot gekennzeichnet werden, Verzeichnisse mit mittlerer Fehlerdichte mit gelb gekennzeichnet werden und Verzeichnisse mit keiner oder niedriger Fehlerdichte in grün dargestellt werden. Diese Farbgebung ist leicht verständlich und international gebräuchlich, sodass ein Benutzer einen direkten Rückschluss ziehen kann. Grundsätzlich könnten jedoch auch andere Farbkombinationen oder auch Muster Anwendung finden. Für die Betrachtung der Software in Bezug auf die Qualität wird in den Analysen jedoch mehr als eine Metrik angewandt. Bei einer zusätzlichen zweiten Metrik, wie sie beispielsweise in Fig. 1 b) dargestellt ist, wird zur Visualisierung der Fehlermengen in einer Ausführungsform vorzugsweise auf einen Farbverlauf der entsprechenden Farbtöne zurückgegriffen. In einer solchen Ausführungsform wird die Farbe des Rechtecks intensiver, je höher die Kennzahl ist und umgekehrt. Die Sättigung der Farbe erreicht hierbei 100%, wenn eine hohe Fehlerdichte vorhanden ist.

Wird eine weitere zusätzliche dritte Metrik angewandt, kann in einer weiteren Ausführungsform deren Darstellung in Form einer dreidimensionalen Struktur dargestellt werden. Hierbei würden die geometrischen Formen, wie beispielsweise Blöcke entsprechend der Metrik an der Z-Achse ausgerichtet werden. Auch in diesem Fall könnte die Höhe der geometrischen Form eine Aussage über die Fehlerdichte ermöglichen, wobei vorzugsweise bei einer niedrigen Fehlerdichte die Höhe der geometrischen Form niedrig wäre und bei einer hohen Fehlerdichte die geometrische Form eine größere Höhe aufweisen würde.

Der Schwellenwert, bei dem die Farbe, der Farbverlauf, die Größe der geometrischen Formen und/oder Dreidimensionalität ihren minimalen Wert, maximalen Wert und/oder einzelne Zwischenstufen erreicht, kann durch manuell den Benutzer, den Auditor, einen Dritten oder im Rahmen einer Kalibrierung des optischen Ergebnisses festgelegt werden. Eine solche Festlegung erfolgt hierbei vorzugsweise vor der Weiterbearbeitung in der ersten Analyse zusammengefassten Ergebnisse oder vor Beginn der ersten Analyse.

Mithilfe der vorgenannten Darstellungen der Fehlerdichte des Quellcodes innerhalb einzelner Verzeichnisse würde mittels der daraus resultierenden Codematrix, wie sie beispielsweise in Fig. 1 b) dargestellt ist, sowohl die Struktur als auch die Fehleranfälligkeit eines Prüfobjekts, wie beispielsweise einer Software visualisiert werden. Jeder Bereich innerhalb der Codematrix, vorzugsweise jede geometrische Form innerhalb der Matrix, gibt einen bestimmten Bereich innerhalb des Quellcodes wieder und erlaubt somit die Identifizierung fehlerhafter Strukturen bzw. bei der Modifikation solcher Stellen, die Konsequenz der Änderung auf die darüberliegenden Hierarchiestrukturen und die Funktionalität des Prüfobjekts insgesamt. Hierdurch wird erreicht, dass ein Auditor oder Prüfer direkt problematische Strukturen innerhalb des Prüfobjekts erkennen kann, ohne zunächst jede einzelne Ebene des Quellcodes von der Wurzel aus untersuchen zu müssen. Ferner ist ersichtlich, ob und wie einer Änderung des Fehlers sich auf das Prüfobjekt auswirkt.

In einem weiteren Ausführungsbeispiel der vorliegenden Erfindung werden die visualisierten Informationen innerhalb der Matrix mit den ihr zugrundeliegenden Informationen verknüpft. Hierbei bilden vorzugsweise die geometrischen Formen die Verknüpfungsfelder, die mit den darunterliegenden Strukturen verbunden sind. Mithilfe einer solchen Verknüpfung lässt sich nicht nur das gesamte Prüfobjekt auch komplett, beispielsweise auf Ordnerebene begutachten, sondern es ist möglich durch die Verknüpfung der zusammenhängenden Informationen bis auf den Quellcode eines bestimmten Verzeichnisses zuzugreifen. Auf diese Weise kann schnell und unkompliziert ein Fehler, welcher sich beispielsweise innerhalb eines Orders befindet und auf mehrere hierarchische Ebenen verteilt ist, aufgefunden und bearbeitet werden.

Wie dem Beispiel der in Fig. 1 bevorzugten Ausführungsform zu entnehmen ist, wird es dem Benutzer, Auditor oder Prüfer ermöglicht, durch die einzelnen hierarchischen Ebenen des Prüfobjekts zu begutachten, indem er zwischen den einzelnen Hierarchieebenen wechseln kann, wie beispielsweise von der Objektebene (X) in die Ordnerebene (Y), in die Dateiebene (Z) bis zum Codeausschnitt. Mithilfe der Verknüpfung der Einzeldaten bzw. Informationen ist eine einfache Wechselmöglichkeit geschaffen worden, die es dem Verwender ermöglicht, eine schnelle Bewertung des Prüfobjekts abzugeben. Der Wechsel von einer Informationsebene auf die darunterliegende oder umgekehrt (falls vorhanden) durch Auswahl einer entsprechenden visualisierten, vorzugsweise geometrischen Form, wie im Beispiel der Fig. 1, in Form eines Rechtecks, ermöglicht einen effizienten und ergonomischen Wechsel von einer Prüfebene zur nächsten, wodurch besonders relevante Komponenten und Informationen zum Erreichen des Prüfziels ausgewählt, überprüft und gegebenenfalls bearbeitet werden können. Der Vorteil hierbei ist, dass der Prüfer nicht jede einzelne Information von der Wurzel aus analysieren muss, um einen möglichen Fehler festzustellen. Mithilfe der visualisierten Darstellung und Verknüpfung der Informationen innerhalb der einzelnen Ebenen eines Verzeichnisses eines Prüfobjekts ist es dem Benutzer hierbei möglich, einem Fehler direkt von der Objektebene (X) zu folgen, die üblicherweise dem Blätterwerk eines Baumes entsprechen würde, die ein Auditor, insbesondere bei komplexen Prüfobjekten nicht ohne Weiteres beurteilen könnte.

Die zugrundeliegenden Informationen auf jeder Ebene können in einem Aspekt der Erfindung durch den Benutzer, Auditor, Prüfer und/oder das Computersystem, wie beispielsweise eine künstliche Intelligenz, bewertet und/oder geändert werden. Im Folgenden wird der Einfachheit halber von Auditor gesprochen, es ist jedoch auch die automatisierte Bearbeitung darunter zu verstehen. Erfolgt eine solche Bewertung und/oder Änderung auf einer Ebene, werden die Informationen analysiert und das aktualisierte Ergebnis wird auf der oder den darüberliegenden Ebenen in der Codematrix, d.h. der visualisierten Darstellung der Fehler, wiedergegeben. Die Aktualisierung des Gesamtergebnisses und/oder der Zwischenergebnisse durch die durchgeführten Änderungen erlaubt dem Auditor einen direkten Zusammenhang bestimmter Fehler mit dem Endergebnis festzustellen. Die hier dargestellte Aufbereitung der Informationen, die eine Bewertung und/oder eine Änderung umfassen kann, kann in einer Ausführungsform ferner auch die Hinterlegung von Entscheidungen, Informationen zu den Fehlern und/oder Kommentare enthalten. Beispielsweise könnten für das zu erreichende Prüfziel irrelevante Informationen; Informationen, die hinderlich für ein positives Prüfergebnis sind und/oder andere für die Prüfung relevanten oder nicht-relevanten Informationen, durch die Auswahl einer bestimmten geometrischen Form innerhalb einer Ebene mit einem Entscheid oder einem Ausführungsvorschlag hinterlegt werden. Eine solche Bewertung der einzelnen Ebenen kann ferner durch die Verwendung einer künstlichen Intelligenz erfolgen oder unterstützt werden, wobei diese anhand eines Abgleichs mit bekannten Auditbewertungen oder durch Analyse von Datenbanken umfassend bekannte Fehlerproblematiken innerhalb von Prüfobjekten eine Handlungsempfehlung vorschlägt und/oder durchführt.

Der Vorteil einer solchen Funktion ist, dass bei der Bewertung durch einen Auditor dieser auf jeder Hierarchiestufe entweder eine Auditentscheidung über ein auf dieser Hierarchiestufe visualisiertes und sichtbares Informationsobjekt fällen oder auf die unter- oder übergeordnete Hierarchiestufe wechseln (falls jeweils vorhanden) kann. Die grafische Darstellung mittels Codematrix auf jeder Ebene kann u.a. auch als Zusammenfassung des aktuellen Prüfergebnisses hinsichtlich der verwendeten Metriken verwendet werden, insbesondere zwischen dem Auditor und Hersteller des Prüfobjekts oder zwischen Hersteller und Kunden des Prüfobjekts.

Folglich umfasst die vorliegende Erfindung daher ein Verfahren, bei welchem ein Prüfobjekt (1) analysiert und bearbeitet wird, in welchem zunächst der Quellcode des Prüfobjekts (1) eingelesen wird, wobei es sich bei dem Prüfobjekt (1) um jedes hierarchisch strukturierte Objekt handeln kann, wie beispielsweise ein technisches Gerät, eine Hardware oder eine Software, entscheidend ist, dass hierarchische Informationen abbildbar sind, wie der Quellcode, Spezifikation, Dokumentation und/oder Daten. In einem ersten Schritt (Schritt a) werden Informationen aus dem Prüfobjekt (1) gewonnen, d.h. das Prüfobjekt mittels Transformation in eine digitale Beschreibung ausgelesen (2). In einem weiteren Schritt wird das Prüfobjekt (1) hierarchisiert (Schritt b), wobei vorzugsweise die natürliche und/oder künstliche Struktur der Informationen des Prüfobjekts (1) ausgenutzt wird. Mithilfe mindestens eines statischen Tests und/oder mindestens eines Metrikverfahres wird die mindestens eine Komponente (3) des Prüfobjekts (1) analysiert. Entsprechende Test-und Metrikverfahren umfassen hierbei die zuvor beschriebenen Methoden und/oder auch neue Verfahren zur Überprüfung von Fehlern. Die Analyse bzw. Berechnung der Metrik erfolgt hierbei vorzugsweise pro hierarchischer Komponente, wobei beliebig viele Hierarchiestufen und beliebig viele Metriken und Test möglich sind. Im Folgenden werden die Analyseergebnisse sodann weiterverarbeitet. Die Weiterverarbeitung umfasst mehrere Teilaspekte, die als Ergebnis die analysierten Ergebnisse und ihre Interaktion auf unterschiedliche Hierarchieebenen im Prüfobjekt darlegt. Hierfür werden die Ergebnisse des mindestens einen Test- und/oder Metrikverfahren in mindestens einer Datenbank aggregiert und die Fehlerdichte in dieser berechnet. Ferner werden den erhaltenen Informationen definierte Funktionen im Prüfobjekt festgelegt und die mittels Test- und /oder Metrikverfahren erhaltenen Ergebnisse somit untergliedert. Zusätzlich erfolgt eine automatisierte Verknüpfung der Informationen mit dem Prüfobjekt (1) und/oder mit Verzeichnissen des Prüfobjekts (1), wodurch ein Hierarchiemodel des Prüfobjekts (1) mit unterschiedlichen Hierarchieebenen generiert werden kann und den Aufbau dieses wiedergibt. Das Hierarchiemodell kann derart gestaltet sein, dass jede Ebene eine Matrix aufweist, in der der Informationsgehalt mindestens einer Metrik eines Verzeichnisses des Prüfobjekts (1) wiedergeben wird. Weitere Hierarchieebenen werden gebildet, indem auf der jeweils darüber liegenden Ebene die Informationen der zuvor definierten Kennzahlen der Verzeichnisse aggregiert und zusammengefasst werden und die Fehleranfälligkeit des Prüfobjekts (1) wiedergeben wird. Anhand dieser Weiterverarbeitung lassen sich nicht nur die Fehler innerhalb des Prüfobjekts (1) bearbeiten und/oder visualisieren, es ist auch möglich Verknüpfungen des jeweiligen Fehlers auf unterschiedlichen Hierarchieebenen nachzuweisen und zu modifizieren. In diesem Zusammenhang umfasst ein weiterer Schritt, der auch automatisiert erfolgen kann, die Bearbeitung, Bewertung und/oder Modifizierung mindestens einer Information und/oder eines Verzeichnisses auf mindestens einer Ebene innerhalb der Matrix (Schritt d). Die somit erreichte Auditierung (Schritt d) bzw. Modifizierung der Komponenten (3'-3ⁿ) des Prüfobjekts (1) auf Basis der Kennzahlen (A-E) auf mindestens einer Hierarchieebene und die Wirkung(en) der Änderung (A'-E') werden hierbei als aktualisiertes Ergebnis auf der oder den darüberliegenden und/oder darunterliegenden Ebenen wiedergegeben. Vorzugsweise erfolgt eine Visualisierung (Schritt e) der Kennzahlen (A-E) nebst Ergebnis des mindestens einen Test- und/oder Metrikverfahrens und/oder der geänderten Kennzahlen (A'-E')mittels Matrix, die die Änderungen auf der mindestens einen hierarchischen Ebene, vorzugsweise auf unterschiedlichen Hierarchieebenen, optisch für den Auditor darstellt.

Die Erfindung betrifft daher auch eine grafische Benutzeroberfläche oder auch Benutzerschnittstelle (Graphical User Interface; GUI), die Informationen jeglicher Art hierarchisch darstellt und die Auditierung und Bewertung dieser Informationen erleichtert.

Das User Interface ist hierbei vorzugsweise auf einem der beiden Systeme a) oder b) ausführbar, wobei diese wie in der folgenden Beschreibung aufgebaut sein können.

Nach einer Ausführungsform umfasst das mindestens jeweils eine zuvor beschriebene System einen Computer mit mindestens einem Arbeitsspeicher, der durch einen Computer ausführbare Komponenten speichert, und ferner mindestens einen Prozessor aufweist, der die in dem Arbeitsspeicher gespeicherten, durch einen Computer ausführbaren Komponenten ausführt. Vorzugsweise weist das Computersystem mindestens zwei solcher Systeme auf, die vorzugsweise mithilfe von Kommunikationsleitungen zur Datenübermittelung miteinander verbunden sind. Die einzelnen Systeme können derart ausgebildet sein, dass sie in einer vernetzten Umgebung zu einem oder mehreren entfernt angeordneten Computern betrieben werden. Bei den Systemen oder entfernt angeordnete Computer kann es sich hierbei um einen oder mehrere Computer, Server, Router, Netzwerk-PCs, Peer-Einheiten oder dergleichen handeln. Darüber hinaus kann es sich bei den Systemen auch um virtuelle Computereinheiten handeln. In einem weiteren Aspekt der vorliegenden Erfindung kann auch Cloud-Computing vorgesehen sein, bei dem auf einen gemeinsam genutzten Pool von konfigurierbaren Datenverarbeitungsressourcen zugegriffen wird. Jedes der zuvor beschriebenen Systeme kann ein solches Cloud-Computing vorsehen. Es können jedoch auch nur Teilaspekte der Nutzung von Cloud-Computing vorenthalten sein. Jedes System oder das Computersystem als Ganzes kann mindestens eine Zugriffsbeschränkung umfassen, die einem bestimmten Personenkreis Zugriff auf bestimmte Daten, Datenbanken, Programme, Ergebnisse und Ähnliches erlaubt. Hierbei werden die Zugriffsbeschränkungen vorzugsweise durch Ausgabe von einem oder mehreren Zuteilungsparametern vergeben, wobei üblicherweise ein Administrator die Parameter festlegt und die Zugriffsrechte auf die einzelnen Einheiten, Daten und Ähnliches bereitstellt.

Die einzelnen Systeme umfassen darüber hinaus vorzugsweise ferner, mindestens einen Bildschirm, mindestens eine Eingabeeinheit, wie beispielsweise, eine Maus, einen Trackball, einen Stift, ein Tastfeld, eine Tastatur, ein Mikrofon, einen Joystick, ein Gamepad und/oder eine Tastatur, jedoch nicht beschränkt auf die vorangehende Auflistung sowie mindestens eine Kommunikationseinheit zur Datenübertragung mittels drahtloser und/oder kabelgebundener Kommunikation, wie beispielsweise eine Netzwerkschnittstelle und einen Anschluss an ein Netzwerk. Diese und andere zuvor genannten Einheiten sind hierbei über mindestens einen Schnittstellenanschluss mit dem Computer verbunden.

Das User Interface zur Auditierung von Prüfobjekten kann ferner neben den zuvor beschriebenen Komponenten und Einheiten innerhalb eines Systems auch eine Steuereinheit umfassen, die in der Lage ist, eine Darstellung auf dem Monitor, dem Bildschirm, einem Touchdisplay oder einer ähnlichen Einheit wiederzugeben, wobei die Darstellung eine Codematrix umfasst. Eine solche Codematrix umfasst zusammengefasste Informationen, die aus einer Analyse eines Prüfobjekts hervorgegangen sind. Hierbei werden die Analyseschritte der unabhängigen Analyse-Engines ausgeführt und deren Ergebnisse aggregiert. Die entsprechenden Schritte einer möglichen Analyse sind die im vorherigen verfahren erläuterten und beschriebenen Schritte. Die Codematrixdarstellung umfasst hierbei mehrere geometrische Formen, vorzugsweise Rechtecke, die jeweils den Quellcode und die Fehlerdichte im Prüfobjekt, beispielsweise innerhalb eines Verzeichnisses der Software aufzeigen. Diese einzelnen Bereiche oder Rechtecke innerhalb der Gesamtansicht (X), werden durch die Steuereinheiten aus einem Speicher, beispielsweise des Systems, entnommen und zusammengestellt. Die einzelnen Bereiche der Codematrix, welche im Folgenden der Einfachheit halber als Rechtecke bezeichnet, jedoch auch jede andere Form aufweisen können, können durch eine Eingabeeinheit ausgewählt werden. Erfolgt eine Auswahl eines bestimmten Bereichs detektiert die Steuereinheit eine Aktivierung und greift auf die im Speicher hinterlegten Daten zurück, die in der Analyse generiert wurden. Der zweite Datensatz, der mithilfe der Steuereinheit nunmehr als zweite Ebene der Codematrix dargestellt wird, umfasst hierbei Informationen, der darunterliegenden Ebene, d.h. eine detaillierte Ansicht der Informationen. Am Beispiel der Fig. 1 werden in einem solchen zweiten Datensatz Informationen auf Ordnerebene (Y) dargestellt. Durch die weitere Auswahl eines Bereichs auf Ordnerebene (Y) kann sich immer weiter in den Hierarchieebenen nach unten bis zum eigentlichen Quellcode gearbeitet werden, wobei die Steuereinheit, die Aktivierung der entsprechenden Bereiche innerhalb der Matrizen detektiert und auf den Speicher des mindestens einen Systems zurückgreift, um die dort gespeicherten Informationen aus der Analyse zu verwenden und graphisch darzustellen.

In einer Ausführungsform der vorliegenden Erfindung kann mithilfe einer Eingabeeinheit auf jeder Ebene der Codematrix, d.h. im Beispiel der Fig. 1 auf Objektebene (X), Ordnerebene (Y) und/oder Dateiebene (Z) eine Bewertung der dort vorliegenden Informationen eingegeben werden und/oder eine künstliche Intelligenz (KI) kann durch eine durch sie ausgeführte Bewertung, vorzugsweise unter Kommunikation mit verschiedenen Datenbanken zu bereits bewerteten Prüfobjekten eine Bewertung zu der jeweiligen Information hinterlegen, die jeweils in mindestens einem Speicher hinterlegt werden. Die Steuereinheit kann auf diese Informationen zugreifen und diese für den Benutzer sichtbar machen. Alternativ kann es sich nicht um hinterlegte Bewertungen, sondern um Änderungen handeln, die durch einen Benutzer über ein Eingabegerät und/oder durch die KI eingebracht wurden. Die Steuereinheit kann in einem solchen Aspekt der Erfindung auf diese Änderungen oder Bewertungen zu der mindestens einen Ebene, beispielsweise X-Y, zugreifen, die vorzugsweise innerhalb mindestens eines Speichers mindestens eines Systems hinterlegt wurden und die Bewertungen und/oder Änderungen in der oder den darüberliegenden Ebenen sichtbar machen. Eine solche unmittelbare Sichtbarkeit der Änderungen und/oder Bewertungen auf den darüberliegenden Ebenen wird vorzugsweise durch die Interaktion der Steuereinheit mit den anderen Komponenten des Systems, insbesondere Arbeitsspeicher(n) und Prozessor(en), ermöglicht. Eine Änderung oder Änderungen innerhalb der mindestens einer Ebene führen zu einer Änderung der Funktionsweise und Qualität des Prüfobjekts. Es ist jedoch verständlich für den Fachmann, dass nicht jede Änderung auf einer bestimmten Ebene gleich zu einer veränderten Funktionalität oder Qualität des gesamten Prüfobjekts führt. In einigen Fällen können getätigte Änderungen auch keine Wirkung, eine negative oder positive Wirkung auf die oberhalb bzw. unterhalb liegenden Hierarchiestufen haben. Üblicherweise führt die mindestens eine Modifikation auf der mindestens einen hierarchischen Ebene der visualisierten Matrix zu einer Veränderung in der Funktionalität des gesamten Prüfobjekts, d.h. beispielsweise des technischen Geräts. Folglich werden Fehler im Prüfobjekt auf einfache und schnelle Weise identifiziert und können modifiziert werden, was zu einer Verbesserung des Prüfobjekts führt.

Die geometrischen Formen innerhalb der Codematrix dienen in einer Ausführungsform als Darstellungselemente für mögliche Fehler innerhalb des Prüfobjekts, als auch als Interaktionselemente, durch welche auf Informationen aus anderen Ebenen zugegriffen werden kann. Die einzelnen visuellen, vorzugsweise geometrischen, Formen stellen somit auch besonders bevorzugt Steuerelemente dar, die dem Auditor zu einem bestimmten Kontext verschiedene Aktionen zur Auswahl anbieten. Diese Art der Steuerung erfolgt vorzugsweise mittels eines Kontextmenüs, bei dem beispielsweise durch eine Eingabeeinheit, wie beispielsweise einer Maus, durch die Mausklicks auf der linken oder rechten Maustaste unterschiedliche Aktionen aufgerufen und gesteuert werden können.

Diese und andere Ausführungsformen der vorliegenden Erfindung werden in der Beschreibung offenbart und sind durch diese umfasst. Die in der vorstehenden Beschreibung und in den Ansprüchen genannten Merkmale sind weiterhin in einer beliebigen Auswahl kombinierbar und die im Rahmen der Erfindung sinnvollen Merkmalskombinationen als offenbart zu betrachten. Weitere Literatur über bekannte Materialien, Verfahren und Anwendungen, die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren erhalten werden, die zum Zweck der Illustration bereitgestellt wurden und den Umfang der Erfindung nicht beschränken sollen.

### BEISPIELE

### Beispiel 1: Verfahren mit nur einer Hierarchieebene und einer Kennzeichenkategorie

In der Fig. 2 ist ein bevorzugtes Verfahren dargestellt, bei welchem ein Prüfgegenstand (1) bearbeitet wird. Hierbei werden aus dem Prüfgegenstand (1) Informationen mittels Transformation gewonnen, die den Prüfgegenstand (1) beschreiben. Bei diesen Informationen, die mittels Transformation (a) gewonnen werden, kann es sich um Quellcodes, Spezifikationen, Dokumentationen, Daten und/oder ähnliche Informationen handeln. Die gewonnenen Informationen des Prüfobjekts (1) durch die Transformation (a) führen zu einer digitalen Beschreibung (2) des Prüfobjekts. Diese Informationen werden im nächsten Schritt aufgrund bestimmter Kriterien in eine hierarchische Ordnung gebracht, wobei eine stufenmäßige Relation zwischen den untergeordneten und übergeordneten Informationen aufbaut wird. Für eine solche digitale Kategorisierung bzw. Hierarchisierung (b) können natürliche oder künstliche Strukturen des Prüfobjekts, wie beispielsweise Quellcodes einzelner Ordner, verwendet werden. Mithilfe der Hierarchisierung können bestimmte Komponenten (3-3ⁿ) ermittelt werden, auch Einzelkomponenten genannt, die in einem weiteren Schritt vermessen (c) werden. Bei der Vermessung (c) werden innerhalb der Einzelkomponenten Kennzahlen ermittelt, die beispielsweise die Fehlerdichte, den Codeumfang oder ähnliche Faktoren ermitteln. Auf Grundlage der Vermessung werden im nachfolgenden Schritt die Einzelkomponenten auditiert (d), wobei bei Bedarf eine Modifizierung der Kennzahlen auf den Hierarchieebenen mit Folge für die höheren und/oder tieferen Hierarchieebenen durchgeführt wird und somit eine Verbesserung des Prüfobjekts bewirkt wird. Zur Erleichterung der Bewertung, Prüfung, Auditierung und/oder Modifizierung werden die in dem Prüfobjekt erhaltenen Informationen, insbesondere Fehler und/oder Kennzahlen, für jede hierarchische Ebene visualisiert, um mögliche Fehler auch in tieferliegenden Bereichen schnell und einfach erkennen und/oder bearbeiten zu können bzw. ihre Wirkung auf die darüberliegende Ebene begutachten zu können. Die Visualisierung (e) der einzelnen Kennzahlen kann mittels einer Farbskala, unterschiedlichen Mustern und/oder Größen erfolgen und ist abhängig von der verwendeten Anzahl der Hierarchieebenen und/oder der Kennzahlkategorien, d.h. der unterschiedlichen Fehlerkategorien.

## Patentansprüche

1. Verfahren zur Auditierung komplexer Informationen eines Prüfobjekts, wobei das Prüfobjekt in einem ersten Schritt einer Analyse unterzogen wird und in einem folgenden Schritt die Analyseergebnisse weiterverarbeitet werden, wobei die Analyse des Prüfobjekts durch ein oder mehrere automatisierte Analyseverfahren erfolgt, deren Ergebnisse aggregiert und in mindestens einer Datenbank und einer Matrix zusammengefasst werden, wobei potentielle Fehler identifiziert und/oder modifiziert werden, um die Funktionalität des Prüfobjekts zu verbessern.

2. Verfahren nach Anspruch 1, wobei Datenstrukturen, Objekte, Klassen und Ebenen des Prüfobjekts mit zugehörigen zusammengefassten Ergebnissen mit der mindestens einen Datenbank verknüpft werden.

3. Verfahren nach Anspruch 1 oder 2, wobei das Verfahren nach der Analyse ferner die
a) Bearbeitung der in der Analyse generierten Ergebnisse; und/oder
b) Übertragung der in der Analyse generierten Ergebnisse oder der veränderten Ergebnisse der Analyse
umfasst.

4. Verfahren nach einem der Ansprüche 1 bis 3, wobei die Weiterverarbeitung der Analyseergebnisse folgende Schritte umfasst:
a) Untergliederung der Ergebnisse in Informationen, wobei den Informationen eine definierte Funktion festgelegt wird;
b) Verknüpfung der Informationen mit dem Prüfobjekt und/oder mit Verzeichnissen des Prüfobjekts; und
c) Erstellung eines Hierarchiemodels mit unterschiedlichen Hierarchieebenen, wobei jede Ebene eine Matrix aufweist, in der vorzugsweise visuell mittels geometrischer Formen ein Informationsgehalt mindestens einer Metrik eines Verzeichnisses des Prüfobjekts wiedergeben wird.

5. Verfahren nach Anspruch 4, wobei eine Verknüpfung der mindestens einen hierarchischen Ebene innerhalb der Matrix mit mindestens einer darunterliegenden und/oder darüberliegenden hierarchischen Ebene erfolgt, wobei vorzugsweise eine durch die mindestens eine Metrik definierte Kennzahl der Verzeichnisse mit dem Prüfobjekt verknüpft wird.

6. Verfahren nach Anspruch 4 oder 5, wobei
a) Hierarchieebenen gebildet werden, indem auf der jeweils darüber liegenden Ebene die Informationen der zuvor definierten Kennzahlen der Verzeichnisse aggregiert und zusammengefasst werden;
b) in einem weiteren Schritt der Bearbeitung die Informationen jeder Ebene jeweils derart aufgearbeitet werden, dass die zusammengefassten Informationen einer jeden Ebene visuell innerhalb der Matrix der entsprechenden Ebene zusammengefasst werden, wobei vorzugsweise die Fläche einer geometrischen Form die Größe der Kennzahl eines Verzeichnisses wiedergibt;
c) Verzeichnisse mit einer hohen Fehlerdichte mittels eines weiteren visuellen Faktors, vorzugsweise eines Farbtons, dargestellt wird; und/oder
d) mehr als eine Metrik für die Weiterverarbeitung verwendet wird, vorzugsweise wobei drei Metriken verwendet werden, die besonders bevorzugt durch unterschiedliche visuelle Graphiken, vorzugsweise jeweils durch einen Farbton, die Farbsättigung und eine dreidimensionale Struktur innerhalb der Matrix unterschieden werden; und/oder
e) ein Schwellenwert für die Fehleranzahl der Verzeichnisse innerhalb der Matrix bestimmt wird, wobei der Schwellenwert vorzugsweise vor der Analyse oder Zusammenstellung der Ergebnisse bestimmt wird.

7. Verfahren nach einem der Ansprüche 4 bis 6, wobei durch die Auswahl eines Verzeichnisses innerhalb einer Matrix einer Ebene ein Rückgriff oder Vorgriff auf die darunterliegende und/oder die darüberliegende Ebene des Verzeichnisses durch die entsprechenden Verknüpfungen der Informationen erfolgt.

8. Verfahren nach einem der Ansprüche 4 bis 7, wobei in einem weiteren Schritt eine Bearbeitung und/oder Bewertung einzelner Informationen und/oder Verzeichnisse auf einer Ebene innerhalb der Matrix erfolgt, wobei vorzugsweise
a) das aktualisierte Ergebnis, das durch die Bearbeitung und/oder Bewertung der Informationen generiert wurde, auf der oder den darüberliegenden und/oder darunterliegenden Ebenen in der Matrix, wiedergegeben wird; und/oder
b) die Bewertung und/oder Bearbeitung der Informationen innerhalb der Ebenen durch eine künstliche Intelligenz unterstützt oder durchgeführt wird.

9. Computerprogramm umfassend Befehle, die bei der Ausführung des Programms auf dem Computer diesen zur Durchführung der Verfahrensschritte nach einem der Ansprüche 1 bis 8 veranlassen.

10. Benutzerschnittstelle (User Interface) zur Auditierung komplexer Informationen eines Prüfobjekts, die die Informationen zu einem Prüfobjekt hierarchisch darstellt, indem die Benutzerschnittstelle auf einem oder mehreren Systemen ausführbar ist, wobei das mindestens jeweils eine System einen Computer
a) mit mindestens einem Speicher umfasst, der durch einen Computer ausführbare Komponenten speichert;
b) mindestens einen Prozessor aufweist, der die in dem Arbeitsspeicher gespeicherten, durch einen Computer ausführbaren Komponenten ausführt, und
c) mindestens eine Steuereinheit umfasst, die in der Lage ist eine Darstellung auf mindestens einem Bildschirm oder einer ähnlichen Einheit wiederzugeben,
wobei die Darstellung eine Matrix umfasst, die zusammengefasste Informationen wiedergibt, die aus einer Analyse und/oder Beurteilung eines Prüfobjekts nach einem Verfahren nach einem der Ansprüche 1 bis 8 hervorgegangen sind, wobei die Matrix mehrere visuelle Darstellungen aufweist, die eine Fehlerdichte im Prüfobjekt wiedergeben, wobei die jeweilige visuelle Form durch die mindestens eine Steuereinheit auf Basis der Analysedaten aus dem mindestens einen Speicher generiert wird; und wobei ferner durch mindestens eine Eingabeeinheit eine Auswahl der mindestens einen visuellen Form ermöglicht wird, wodurch ein Wechseln zwischen den Informationen auf verschiedenen Hierarchieebenen erfolgt.

11. Benutzerschnittstelle nach Anspruch 10, wobei mithilfe der Eingabeeinheit Bewertungen und/oder Änderungen innerhalb der Matrix hinterlegt werden, wobei eine Sichtbarkeit der Änderungen und/oder Bewertungen auf den darüberliegenden Ebenen bzw. darunterliegenden Ebenen durch die Interaktion der Steuereinheit mit den anderen Komponenten des Systems, insbesondere Speichern und dem mindestens einen Prozessor, erfolgt.

12. Computersystem zur Durchführung eines Verfahrens nach einem der Ansprüche 1 bis 8, zur Ausführung eines Computerprogramms nach Anspruch 9 oder eine Benutzerschnittstelle nach Anspruch 10 oder 11 aufweisend, wobei das Computersystem mindestens zwei Systeme umfasst, die jeweils mindestens einen Speicher und mindestens einen Prozessor aufweisen, die mittels einer Datenübertragungseinheit miteinander verbunden sind, wobei auf einem der Systeme ein Prüfobjekt umfasst ist, das durch mindestens eine Funktionseinheit in Bezug auf bestimmte Kriterien analysiert wird, wobei die mindestens eine Funktionseinheit ferner zur Erstellung mindestens einer Matrix ausgelegt ist, bei der die Matrix, die Fehlerdichte der Verzeichnisse innerhalb einer Ebene eines Prüfobjekts wiedergibt.

13. Computersystem nach Anspruch 12, wobei die mindestens eine Funktionseinheit
a) zur Analyse eines Prüfobjekts in unterschiedlichen Programmiersprachen ausgebildet ist;
b) auf dem einen der mindestens zwei Systeme umfasst ist und auf die Nutzung durch dieses eine System beschränkt ist;
c) ferner ausgebildet ist, folgende Schritte durchzuführen:
i) Verknüpfung von Informationen mit einzelnen Verzeichnissen eines Prüfobjekts;
ii) Erstellung einer Matrix, die Fehlerdichte der Verzeichnisse innerhalb einer Ebene wiedergibt;
iii) Interaktion der Steuereinheit mit den anderen Komponenten des Systems, insbesondere Speicher(n) und Prozessor(en), um eine Sichtbarkeit von getätigten Änderungen und/oder Bewertungen innerhalb der einzelnen Verzeichnisse auf die darüberliegenden und/oder darunterliegenden Ebenen zu erstellen.
